# EUROPEAN PATENT APPLICATION

(11) **EP 2 363 280 A1**
(43) Date of publication of application: **07.09.2011**
(21) Application number: 11156627.9
(22) Date of filing: 02.03.2011
(51) Int. Cl.: B31B 3/46

(54) **Apparatus and procedure for making edged trays**

(30) Priority: 05.03.2010 IT RE20100016
(71) Applicant: All Glass S.r.l., 43029 Traversetolo (PR) (IT)
(72) Inventor: Orlandini, Luigi, 43029, TRAVERSETOLO (PARMA) (IT)
(74) Representative: Corradini, Corrado

(57) **Abstract**

The apparatus comprises a feeding station (40, 40A) for supplying blank sheets; a delivery station (60, 60 A) of the trays formed from the sheets; a folding station (50, 50A) for the blank sheets (15), comprising a frame (51) designed to receive and fold the blank sheet and form the edged tray (10), following forced introduction of the sheet (15) internally of the frame (51). An automatic handling device (20) having several axes is destined to handle blank sheets (15) by means of a pick-up member (30) destined to engage single sheets, which device (20): picks up a sheet (15) at a time from the feeding station (40, 40 A) and pushes it into the matching frame (51); releases the formed tray (10) internally of the matching frame after insertion thereof by the handling means (20); inverts the tray (10) by rotation of the matching frame; newly picks up the tray (10), in the inverted configuration, using the handling means (20), and releases the tray (10) in the delivery station (60, 60A) of the formed trays.

## Description

The present invention relates to an apparatus for forming edged trays from blank sheets.

The use of "edged" trays has been known for various decades, that is, originally flat sheets, usually made of cardboard, whose flaps are folded by 90° and fixed such as to form an edge running all along the sheet perimeter; these trays are used for the packing/conveying of stacked products.

These edged trays are normally used as basic elements in the formation of stacks of objects, usually palletized in an unpacked state; they are used with the concavity upwards, as bottom base for a layer of stacked objects, or with the concavity downwards, as top cover for a layer of stacked objects.

The techniques known to form such edged trays are referable to apparatus with several handling members for the blank sheet/tray and with a very complex basic structure.

These apparatus comprise a pick-up member, usually having rectilinear motion in two directions, horizontal and vertical, whose task is to pick up a blank sheet, by means of a sucker system or a vacuum system, starting from a blank sheet supply store, usually constituted simply by a vertical stack of such sheets.

The picking member takes the sheet to the matching frame, where it is deposited.

The forming area is the "heart" of the apparatus and is mainly characterized by a metallic structure generally having a rectangular section, where a series of walls, known as folding walls, usually orientable and adjustable, are fixed. This structure usually acts as a supporting frame for the picking member and as a supporting frame in which a punch slides (the "die").

This punch pushes the blank sheet within the space defined by the folding walls, provoking, in this way, the folding of the edges and the flaps according to the folding lines pre-printed on the same sheet.

This punch generally moves in a substantially vertical direction.

At the end of the edge- and flap-folding procedure, the tray takes on its final shape and, by means of a second moving member equipped with a vacuum- or sucker-picking system, is moved from the forming area to a delivery station, where the flap fixing stage is usually performed using one of the known systems, the most widespread techniques being jointing, cold and/or warm-gluing or seaming. The delivery station is the picking-up point for a subsequent use of the formed tray.

Some known systems include the possibility of rotating the tray about an axis parallel to the plane constituted by the above mentioned tray, supplying it in a different way for its subsequent use, depending on whether it is to be used as a tray or, by inverting it, as a top cover.

An apparatus of the above mentioned type is described in the GB no. GB 2 023 548, where a blank displacement member picks up and moves a blank sheet between a vertical feeding store and a folding frame, located substantially at the store side. The sheet is placed over the folding frame and, from this position, is pushed inside the folding walls by means of a special punch, realizing in this way the edges and flaps necessary to transform the blank sheet into a tray. A separate apparatus deals with the transfer of the tray from the forming zone to the delivery station.

Canadian patent publication CA 2 11 766 describes a similar apparatus, different in that a conveyor substantially deals with the blank sheet transfer from the feeding magazine to the folding frame, and also with the transfer of the formed tray from the forming area to the delivery station.

Similar apparatus is described in the patent publication EP 1 787 793, which comprises a feeding store for blank sheets installed immediately below the tray-folding walls, and a pick-up member of one sheet at a time, operating with a fluid vacuum system, and a folding station with one or more tray-folding walls, moving in synchrony with the above-mentioned moving member such as to allow access to the forming zone and then to act as tray centring and forming walls.

In detail, the pick-up member of blank sheets from the feeding store also acts as a punch for the shaping of the blank sheet in the area defined by the folding walls and also takes the formed tray to the delivery station, moving with a mainly straight and vertical movement between the feeding magazine and the delivery station. This member can also rotate about an axis that is perpendicular to the direction it translates in. A second moving member, located at the delivery station, rotates the tray and can transfer it in various orientations.

Patent publication WO 2010/003083 illustrates an apparatus for packing articles starting from blank carton sheets, comprising a matching frame suitable for receiving and folding the blank sheet up to forming an edged tray, following forced insertion of the sheet internally of the matching frame and an automatic handling means, having several axes, suitable for manipulating blank sheets by means of a pick-up organ of the single sheets which removes one sheet at a time from the supply station and pushes it into the matching frame.

In relation to the apparatus of the known art, it is worth noting that although they more or less effectively reduce the plan overall dimensions and the number of blank sheet/tray moving members, they comprise numerous and complex moving structures with a consequent need for frequent maintenance and/or adjustments, always requiring carrying-out inside the operating area. The known techniques, though reducing the overall plan dimensions, do not differ in terms of application flexibility, distinguishing also for rigid positions and well defined both concerning the picking station and the delivery station. An aim of this invention is to realize an apparatus able to form edged trays starting from blank sheets, which apparatus satisfies flexibility requirements, freeing up the space arrangements and the positioning of the feeding, forming and delivery stations, while maintaining overall a compactness which is variable according to the configurations that it can provide.

A further aim is to realize an apparatus having several pick-up points of the blank sheet in progress and enabling, in this way, an increase and diversification of apparatus productivity.

A further aim is to realize an apparatus also having several points at which the fashioned tray can be delivered, so that a multiplicity of users can be supplied.

Another purpose is to realize an edged-tray forming method having a single moving member that could at the same time pick, transfer, form and place the blank sheet/edged tray, so that the maintenance and/or adjusting operations are simplified and can be carried out in a dedicated area as required and/or where there are no moving members present, thus increasing the apparatus safety standards.

These and other aims besides are attained by the present invention, as it is characterised in the accompanying claims.

The invention is set out in detail herein below with the aid of the accompanying figures of the drawings, which illustrate an embodiment, provided by way of non -exclusive example.
Figure 1 is a plan view from above of the apparatus.
Figure 2 is a vertical elevation view of the handling member, the feeding station and the folding station.

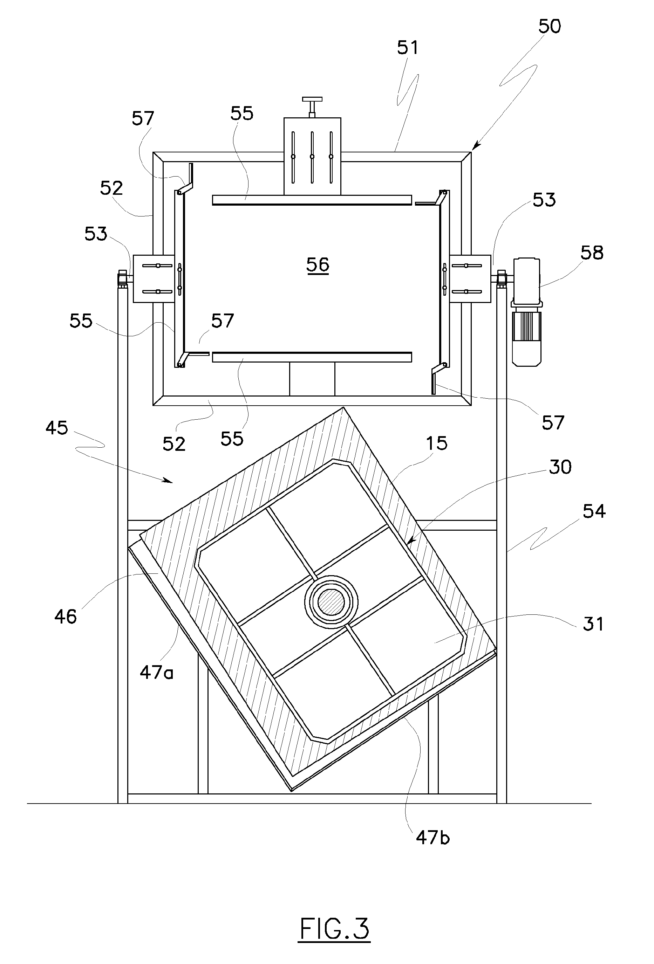

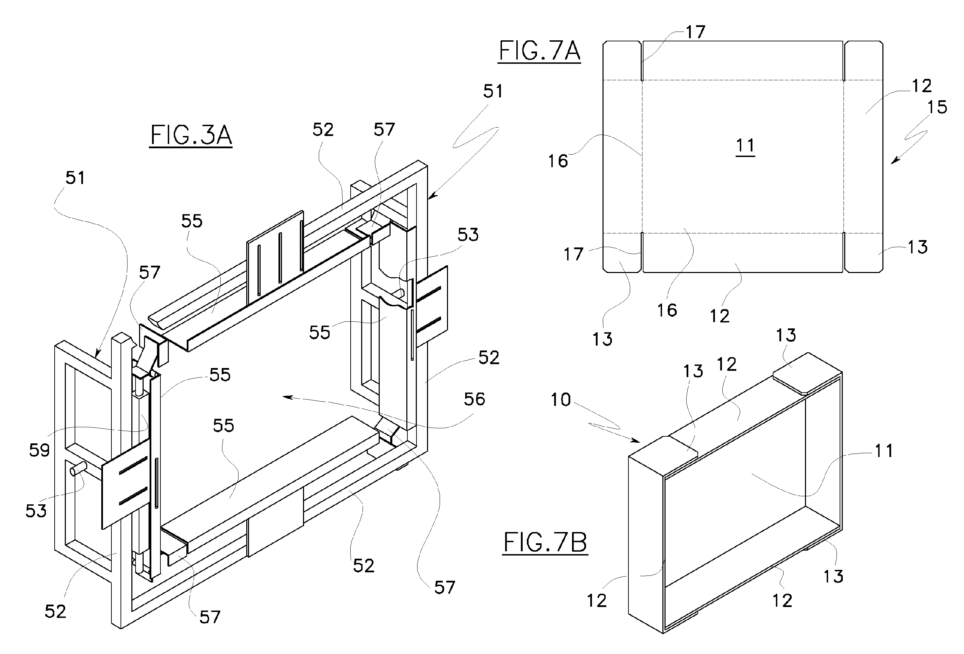

Figure 3 is a frontal vertical elevation of the folding system of figure 2, and of the blank sheet centring station.
Figure 3A is a perspective view of the matching frame of figure 3.

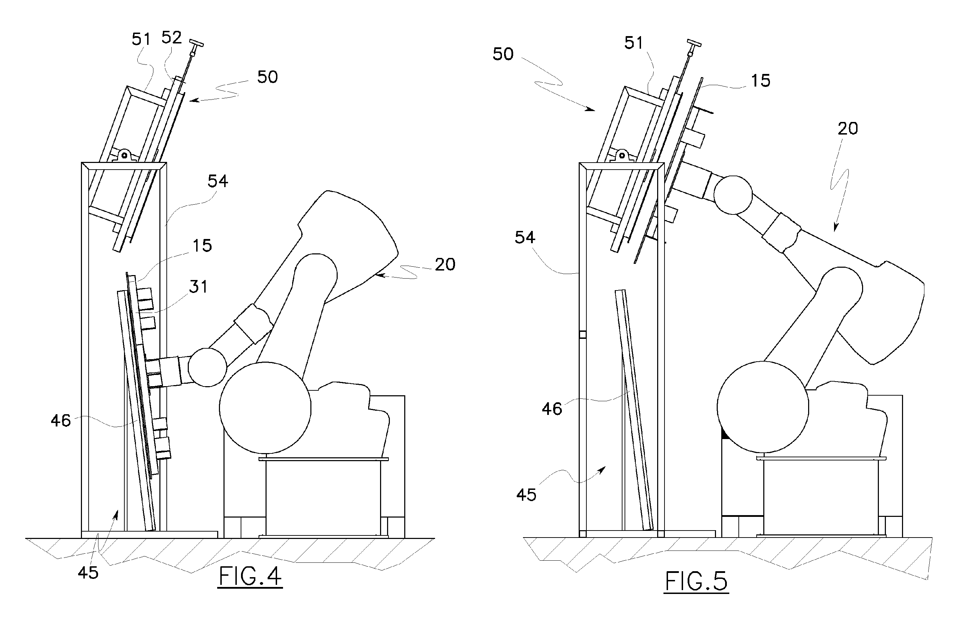

Figure 4 is a lateral vertical elevation view of the folding station, and the centring station of figure 3, and the handling member during the blank sheet centring phase.
Figure 5 is the same view as in figure 4, wherein the handling member is in the folding phase of the blank sheet.
Figures 6A, 6B and 6C show the handling device picking member in the same subsequent running phases related with the matching frame of the folding station.
Figure 6D is an enlarged detail of figure 6B.
Figure 7A is a plan view of the blank sheet.
Figure 7B is a perspective view of the edged tray.

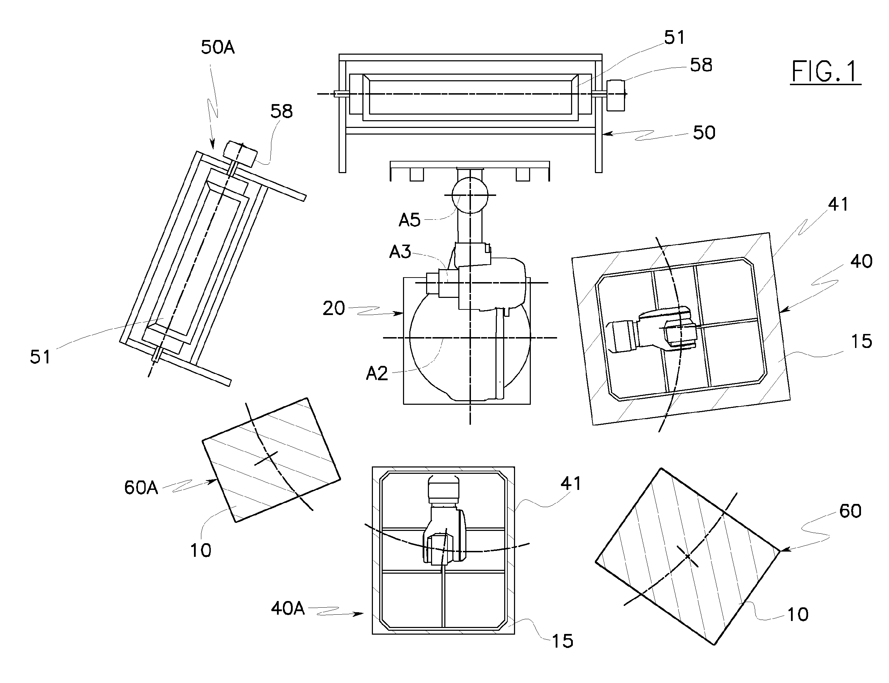

The apparatus (generally illustrated in figure 1) includes an automatic multiple-axis handling means 20, for handling blank sheets with a pick-up member of single blank sheets15.

The handling means 20 is preferably a type of multifunctional industrial programmable robot having several movement axes.

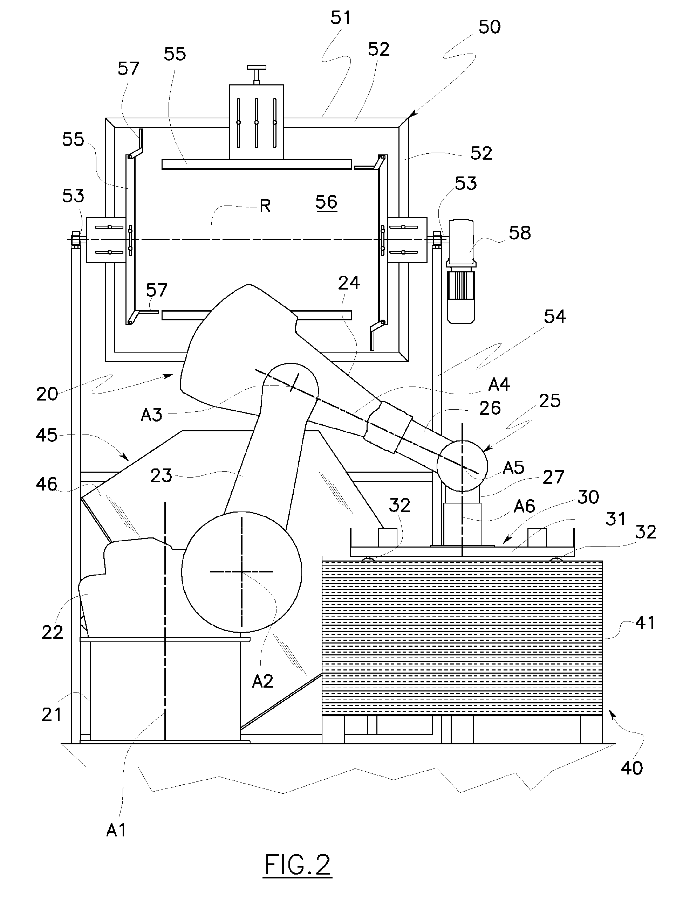

According to the embodiment illustrated in the figures (see in particular figure 2) the illustrated handling member includes a fixed base 21 and a mobile base 22 which can be rotated about a first vertical fixed axis A1 with respect to the fixed base 21 it is supported by. A first arm 23 is borne by the mobile base 22 and is constrained thereto such as to be able to turn around a second horizontal axis A2. A second arm 24 is borne by the free end of the first arm 23 and is constrained thereto such as to be able to rotate about a third horizontal axis A3.

The second arm 24 bears a head 25 having a first element 26 destined to rotate about a fourth longitudinal axis A4, intersecting axis A3, and a second element 27, restrained to the first element 26 and able to rotate with respect thereto, according to both a fifth horizontal axis A5 and a sixth longitudinal axis A6 intersecting axis A5.

The pick-up member 30 is fixed to the second element 27, which pick-up member 30 is suitable for picking up single blank sheets and to act as a pushing member in the forced introduction of the sheet inside the frame. In particular, the pick-up member 30 includes a flat tubular body 31 that extends in plan view approximately the same the base 11 of the tray, but not over the perimeter thereof, and exhibits suckers 32 working in aspiration and destined to adhere to the surface of one blank sheet 15 at a time, and to retain it by suction.

A feeding station 40 is located within the range of action of the handling means 20, and supplies blank sheets, for example formed by a stack 41 of blank sheets placed on a pallet.

A folding station 50 of blank sheets is located within the range of action of the handling means 20; the folding station 50 comprises a matching frame 51 suitable for receiving and folding the blank sheet to form the edged tray following the forced introduction of the sheet into it.

More in detail, the frame 51 includes four sides 52 joined to form a rectangle whose frame is supported, via pins 53, by a fixed base structure 54, such as to be able to rotate about a horizontal axis R.

A set of folding walls 55 is installed inside the matching frame 51, which walls 55 define a hollow area 56 with rectangular profile, with a dimension and shape that are substantially the same as the base 11 of the blank sheet. The hollow zone 56 preferably has adjustable dimensions, by means of adjustment of the walls 55 position in relation to the sides 52 of the frame. The frame 51 preferably includes one or more auxiliary devices 57, activated by jacks 59, for folding and fixing the tray flaps 13, which auxiliary devices 57 also constitute the means for keeping the tray inside the matching frame.

In particular, the auxiliary devices 57 are shaped as small plates which can oscillate from an open position to a closed position by folding, following the said oscillation, the relevant flaps 13 against the nearby lateral edge 12. According to the shape of the folding walls 55, the auxiliary devices 57 and the blank sheet 15, the flap 13 folding can be performed under or over the lateral edges 12.

A blank-sheet centring station 45 is located in the vicinity of the folding station 50, which station 45 orientates the blank sheet placed inside into a pre-determined disposition.

In particular, the centring station 45 includes a rest wall 46 for the sheet having an almost vertical inclination, and two supporting low fillets 47A and 47B for two respective sides of the sheet 15 located at two respective low sides of the wall 46, where the fillets 47A and 47B form an angle which is the same as the angle of the blank sheet 15 (typically of 90° between them) and this angle defines the lowest point for the support of the same sheet.

The station 45 can properly be supported by the same base structure 54, below the matching frame 51.

A delivery station 60 is also provided, located, like the other stations, within the range of action of the handling means 20, the formed trays 10 being placed on the said delivery station 60.

The handling device 20 is located approximately at the centre of the apparatus and is able to interact with all the stations of the apparatus, in particular with the feeding station 40, with the centring station 45, with the folding station 50 and with the delivery station 60.

In particular, the handling means 20 is designed to pick up a sheet at a time from the feeding station 40 and to push it into the frame 51, and then to take and release it into the delivery station 60 of the formed trays.

The frame 51 is destined to retain a formed tray by the forced introduction of the blank sheet 15 in the hollow area 56 of the frame 51 and, according to needs, to rotate about the axis R in order to invert the spatial disposition of the tray. The handling member is destined to release the formed tray 10 internally of the frame 51 after having inserted it in the hollow zone 56, and to grip it again after it has been inverted by means of the rotation of the frame 51.

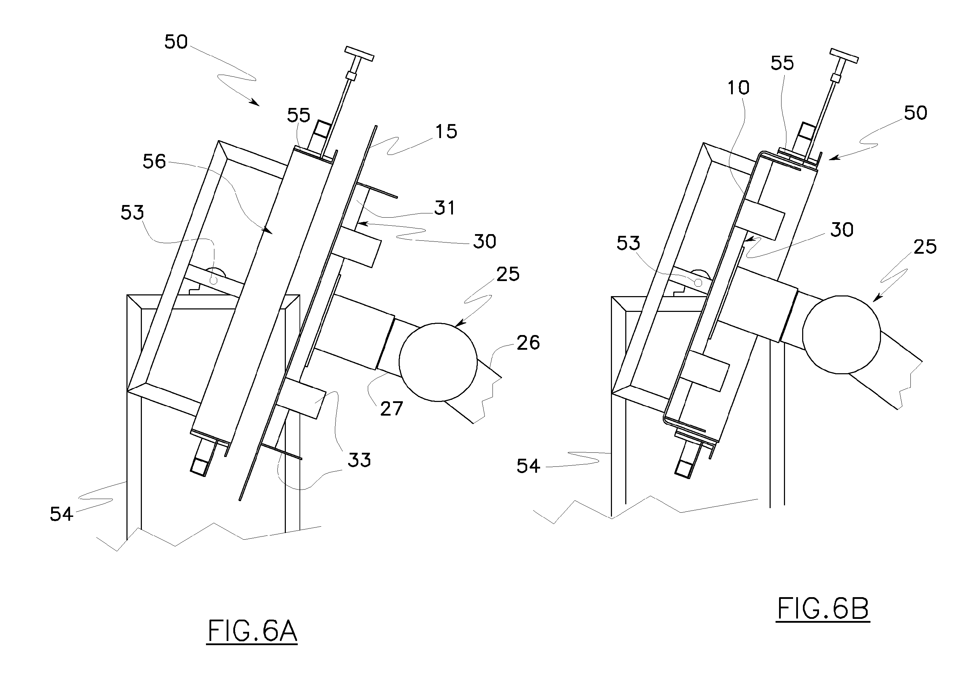

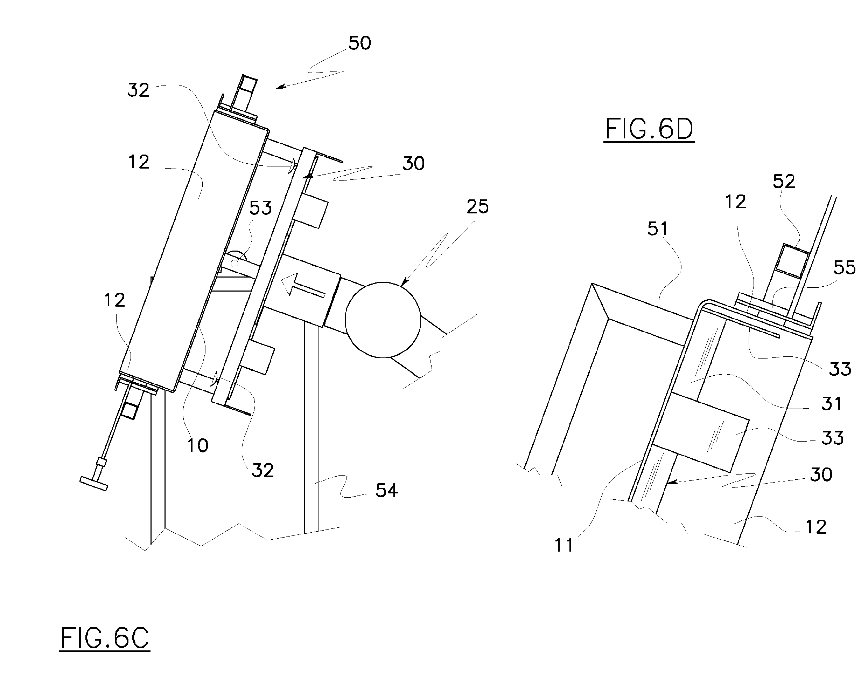

The formation of the tray 10 by means of the described apparatus first comprises a stage wherein the handling means 20 picks up one sheet 15 at a time from the feeding station 40 and then pushes it into the frame 51, into the hollow zone 56 and keeping it parallel to the plane identified by the frame 51 (this stage is illustrated in figures 6A and 6B); following this penetration, the shaping of the edged tray takes place, caused by plastic deformation of the blank sheet 15. By effect of the relevant position of the sheet 15 with respect to the folding walls 55, the folding of the edges 12 takes place along to the folding lines pre-printed on the same sheet.

During the passage through the walls 55, the base 11 is pushed and accompanied by the flat body 31 of the pick-up member 30 it rests against; the lateral edges 12 are on the contrary folded following the push they receive from the contact with the walls 55; the flaps 13 are folded, bringing the auxiliary devices 57 into closed position. The folding of the flaps 13 can also be performed before the folding of the adjacent lateral edges 12, depending on the conformation of the walls 55, of the auxiliary devices 57 and of the blank sheet 15.

For a better folding result, some flat lugs 33 are fixed to the flat body 31, perpendicular to the body 31, which act as abutting elements for the edges 12 during the stage when they are folded and for the following folding of the flaps 13 with respect to the edges 12.

The thus-formed tray 10 is then taken by the means 20 to the delivery station 60, where it is picked up by other means.

Before the folding operation, the centring station 45 can be used to arrange the sheet 15 in a perfectly-centred position with respect to the pick-up member 30, thus cancelling any eventual positioning mistakes or inexactness of the sheet positioning in the feeding station 40.

To this end, the handling member releases the sheet 15, just picked up from the stack 41, leaning against the wall 46; the sheet descends by force of gravity along the wall 46 until it leans on both on the fillet 47A and on the fillet 47B, becoming arranged in a precise and constant spatial position, where it is picked up again centrally by the device 30.

It is worthy of note that the centre of gravity of the centred sheet varies according to the geometry of the wall 46 and the blank sheet 15, with respect to the angle defined by fillet 47A and fillet 47B. Once the geometry of the wall 46 and the geometry of the sheet 15 are known, the position of the centre of gravity is also recognized and corresponds to the pick-up point of the centred sheet.

According to a possible embodiment, the tray 10, once formed, is released by the pick-up member 30 and retained internally of the frame 51 by effect of the pressure exerted by the folding walls 55 and the auxiliary members 57; the frame 51 is then turned about the axis R of the pins 53, typically through an angle of 80°, by means of an electric or pneumatic actuator 58 installed on the base frame 54 (figures 1 and 2).

The pick-up member 30 then once more picks up tray 10, in inverted configuration, and takes it to the delivery station 60.

The apparatus, though using the same handling means 20, can advantageously comprise at least an additional/auxiliary feeding station, 40A, in particular for blank sheets having different dimensions with respect to the station 40 (see figure 1).

Further, it can advantageously comprise an additional/auxiliary folding station, 50A, in particular to form trays having different dimensions with respect to the station 50 (see figure 1).

Further, it can advantageously comprise an additional/auxiliary delivery station, 60A, in particular for trays having different dimensions with respect to the station 60 (see figure 1).

The pick-up member 30 can assume almost any spatial arrangement in any point it is situated, during functioning, along its movement between the feeding station 40 and the delivery stations 60; the different stations are therefore free from rigid geometric reciprocal restraints.

In particular, the spatial disposition of the sheet 15 during its formation is almost independent of the placing and orienting of the stack 41 in the feeding station 40; therefore the stack 41 can have a different inclination to the vertical one.

Likewise, the spatial disposition of the sheet 15 during its forming is almost independent of the placing and orientating of the delivery stations 60.

These aspects are an improvement on the known techniques because they allow this apparatus to be installed in areas having various geometric features, in particular enabling a random inclination to the stack 41 and to the station 60.

In a possible application of the apparatus, an area is designated for maintenance and for the regulation of the pick-up organ and the fluid suction system, in particular an area is designated as external to the working.

In a possible application of the apparatus, an area is designated for the operation of fixing the edge folding and/or the lugs, to be performed with a crimping procedure, hot and/or cold gluing, and/or another known technique, in a duly prepared area almost unconnected to the other working stations.

Obviously, numerous modifications of a practical/applicational kind can be introduced, without forsaking the ambit of the inventive idea, as claimed herein below.

## Claims

1. An apparatus for forming edged trays for packing/conveying of products, starting from blank sheets (15), comprising:
a feeding station (40, 40A) which supplies blank sheets, and a delivery station (60, 60A) of the trays when formed,
a folding station (50, 50A) of the blank sheets (15), including a matching frame (51) for receiving and folding the blank sheet to form the edged tray (10), following forced introduction of the blank sheet (15) into the frame (51);
automatic handling means (20), having several axes, designed to handle blank sheets (15) with a pick-up member (30) of single blank sheets (15), suitable for picking up single blank sheets and acting as a pushing means for a forced introduction of the sheet (15) into the matching frame (51),
the handling means (20) being destined to pick up a sheet (15) at a time from the feeding station (40, 40A) and to push it into the matching frame (51), and then to take and release it into the delivery station (60, 60A) of the formed trays (10);
**characterized in that** the matching frame (51) is destined to retain a formed tray (10) internally thereof, and according to the use requirements of the tray (10), to rotate on itself in order to invert a spatial arrangement thereof, the handling means (20) being destined to release the tray (10) formed internally of the frame (51) after insertion thereof and newly grip the tray (10) following forming and possible inversion thereof by rotation of the frame (51).

2. The apparatus according to claim 1, **characterized in that** the matching frame (51) comprises one or more auxiliary devices (57) for folding and fixing of flaps (13) of the tray (10), the devices (57) also constituting retaining means of the tray (10) internally of the matching frame (51) during rotation of the frame (51).

3. The apparatus according to claim 1, **characterized in that** it comprises a centring station (45) of the blank sheet (15), which centring station (45) is destined to orientate the blank sheet (15) located internally thereof according to a predefined disposition.

4. The apparatus according to claim 1, **characterized in that** the centring station (45) comprises a rest wall (46) for the sheet (15) which rest wall (46) has an almost vertical inclination and two lower supporting fillets (47A, 47B) for the two respective sides of the sheet (15), located on the two respective lower sides of the wall (46), the fillets (47a, 47b) forming an angle equal to an angle of the blank sheet (15), the said angle defining the lowest rest point of the sheet (15).

5. A procedure for forming edged trays (10) starting from blank sheets (15) by means of an apparatus comprising a feeding station (40, 40A) which supplies blank sheets (15), and a delivery station (60, 60A) for the trays (10) following formation, comprising:
providing a folding station (50, 50A) of the blank sheets (15) including a matching frame (51) destined to receive and fold the blank sheet (15) such as to form the edged tray (10) following forced introduction of the sheet (15) internally of the frame (51);
providing an automatic handling device (20) having several axes, destined to handle the sheets (15) by means of a pick-up member (30) of the single sheets (15) further destined to act as a pushing means for forced insertion of the sheet (15) internally of the matching frame (51);
using the handling means (20) to pick up one sheet (15) at a time from the feeding station (40, 40A) and to push it into the frame (51),
**characterised in that** it comprises:
releasing the formed tray (10) internally of the matching frame (51) after insertion thereof by the handling means (20),
inverting the tray (10) by rotating the matching frame (51),
re-gripping the tray (10) in the inverted configuration, by the handling means (20)
then releasing the tray (10) in the delivery station (60, 60A) of the formed trays.

6. The procedure according to claim 5, **characterized by** the fact that it comprises stages of:
providing a centring station (45) of the blank sheet (15) comprising a rest wall (46) for the sheet (15), which rest wall (46) has an almost vertical inclination, and two lower support fillets (47a, 47b) for two respective sides of the sheet (15), located on two respective lower sides of the walls (46), the fillets (47A, 47B) forming a 90° angle between them, the said angle defining a lowest rest point of the sheet (15);
releasing the sheet (15) just picked up from the stack (41), to rest against the wall (46);
newly picking up the sheet (15) from the device (30) after the sheet (15) has become arranged in a fixed position due to force of gravity.
